# EUROPEAN PATENT SPECIFICATION

(11) **EP 2 258 638 B1**
(45) Date of publication and mention of the grant of the patent: **08.08.2012**
(21) Application number: 09162080.7
(22) Date of filing: 05.06.2009
(51) Int. Cl.: B65G 45/22, B65G 45/24

(54) **Conveyor treatment application system with multiple inputs**
Anwendungssystem zur Behandlung eines Förderbandes mit mehreren Eingängen
Système d'application de traitement de transporteur avec plusieurs entrées

(43) Date of publication of application: 08.12.2010
(73) Proprietor: Diversey, Inc., Sturtevant, WI 53177 (US)
(72) Inventor: Gervasoni, Diego, Motta Visconti (MI) (IT); Morasini, Rodolfo, Capergnacica (CR) (IT)
(74) Representative: Ruschke, Hans Edvard

(56) References cited:
- EP-A1- 1 140 673
- WO-A1-2008/031176
- US-A- 5 247 957
- US-B1- 6 360 874

## Description

### BACKGROUND

Operation of a conveyor typically requires not only a periodic maintenance with detergents and/or disinfectants, but also a continuous application (with appropriate intervals) of a so-called lubricant or of appropriate water dilutions of a so-called lubricant. For example, the conveyor's moving/interacting component may need lubrication. Also, the conveyor's interaction with items that it conveys may generate debris that needs to be washed away or sanitized to avoid soiling the conveyed items or degrading the operation of the conveyor. It is known to apply a lubricant and a cleaner and/or disinfectant to the conveyor with separate dedicated dispensing systems (systems to apply/distribute/spray the lubricant, the lubricant solution, the cleaner and or disinfectant solution(s) to the tracks/conveyors). It is also known to provide a conveyor treatment system that applies a lubricant and cleaner mixture to the conveyor pumped from a single source containing the mixture.

### SUMMARY

The present invention relates to a system for applying (i.e., spraying, brushing, delivering, dispensing, pouring, deluging, etc.) a first conveyor treatment component (such as a lubricant or a solution of a lubricant) and a second conveyor treatment component (such as a cleaner or a disinfectant or both or a solution of one of the two or of both of them) to a conveyor according to the preamble of claim 1. Such a system is disclosed in US 6 360 874 B1. The system comprises a pump system and at least one application header (which applies the products/solutions to the conveyors) in communication with the pump system (which may include one or more pumps or pump systems, dilution system(s), or dilution and pump system(s)). The distribution head comprises a header/bar, a coupling, and an applicator. The coupling has a first inlet to receive the first conveyor treatment component from the pump system, a second inlet to receive the second conveyor treatment component from pump system, and an outlet. The applicator is coupled to the outlet of the coupling and configured to apply (i.e., distribute, brush, spray, dispense, pour, deluge, etc.) either the first conveyor treatment component or the second conveyor treatment component to the conveyor alternated in due sequences and with appropriate controlled intervals and or volumes.

The present invention also relates to a method of treating a conveyor according to the preamble of claim 8. The method comprises providing a first conveyor treatment component, a second conveyor treatment component, and one or more application devices, each distribution device comprising a coupling and an applicator, the coupling having a first inlet to receive the first conveyor treatment component and a second inlet to receive the second conveyor treatment component, and an outlet in communication with the applicator. The method further comprises applying the first conveyor treatment component to the conveyor by pumping the first conveyor treatment component to the first inlet of the coupling.

The present invention does not relate to a method of treating the brushes used to apply a lubricant (or a solution of a lubricant) to conveyors passing periodically through the brushes (with the same system and method described above) with a product other than a lubricant (e.g., a cleaner or a disinfectant or a product with the capability of controlling microbiological contamination or a combination of those products) or a dilution of such a product.

The present invention further relates to various features and combinations of features shown and described in the disclosed embodiments. Other ways in which the objects and features of the disclosed embodiments are accomplished will be described in the following specification or will become apparent to those skilled in the art after they have read this specification. Such other ways are deemed to fall within the scope of the disclosed embodiments if they fall within the scope of the claims which follow.

### DETAILED DESCRIPTION OF PREFERRED AND EXEMPLARY EMBODIMENTS

Before explaining a number preferred, exemplary, and alternative embodiments of the invention in detail it is to be understood that the invention is not limited to the details of construction and the arrangement of the components set forth in the following description or illustrated in the drawings. The invention is capable of other embodiments or being practiced or carried out in various ways. It is also to be understood that the phraseology and terminology employed herein is for the purpose of description and should not be regarded as limiting.

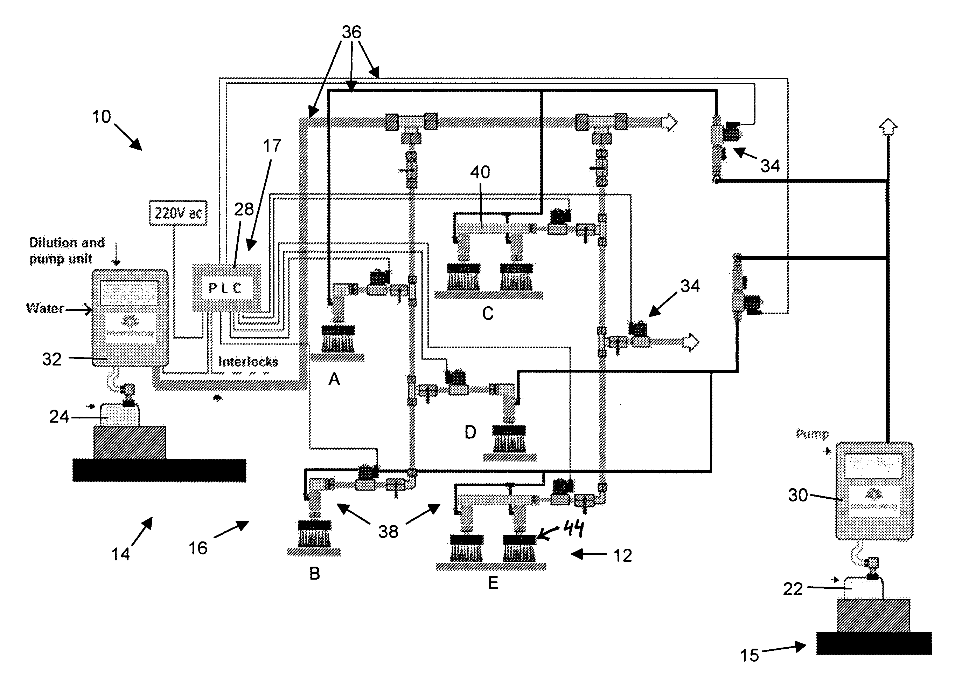

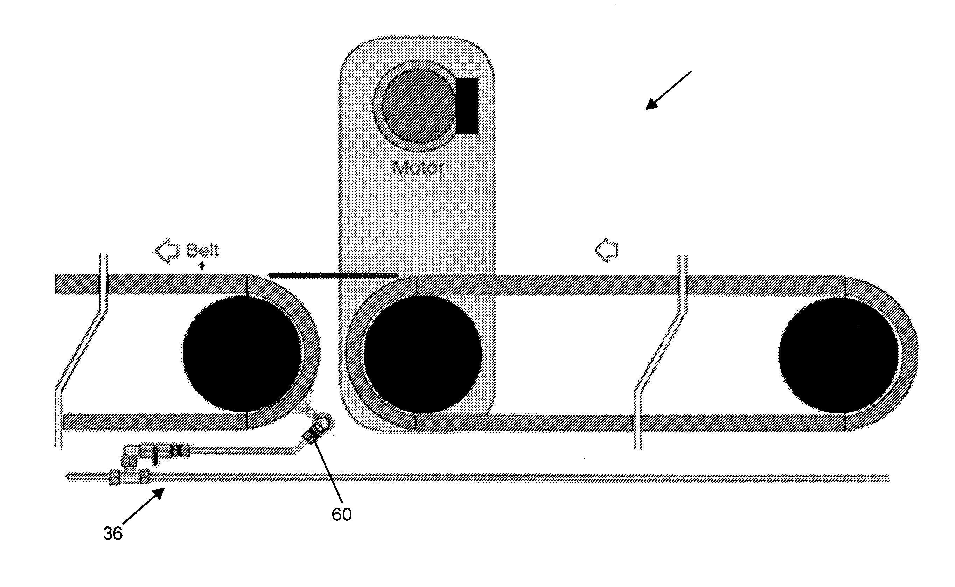

Proceeding now to descriptions of the preferred and exemplary embodiments, FIG. 1 shows a conveyors treatment system 10 for a conveyor system 12. Schematic representations of separate portions of the conveyor system 12 are designated with either A, B, C, D, E in FIG. 1. System 10 is configured to apply multiple components (e.g., lubricants, cleaners, solutions of them, etc.) to the conveyor system 12 to improve its operation, and clean and/or sanitize its components. The system 10 includes a first dosing system 14, a second dosing system 15, a control system 17, and a dispensing system 16 for applying a first conveyor treatment component and a second conveyor treatment component to the conveyor system 12.

For purposes of this disclosure and not for limitation, the first conveyor treatment component comprises a lubricant 18 and the second conveyor treatment component comprises a cleaning agent (cleaner 20). According to an exemplary embodiment, the lubricant 18 may be a "dry" lubricant, meaning that it is not provided in a water solution. In an exemplary application for a food industry conveyor, the dry lubricant is from the Dry Tech 5 program commercially available from JohnsonDiversey of Racine, Wisconsin. According to an exemplary embodiment, the cleaning agent 20 (e.g., cleaner, detergent, sanitizer, etc.) is a liquid solvent intended to remove debris and/or sanitize the conveyor (e.g., tracks, rollers, guides, bearings, etc.). In an exemplary application for food industry conveyor, the cleaner is a Dicolube Clearline solution (e.g., 1%-2% diluted in water) commercially available from JohnsonDiversey of Racine, Wisconsin. Alternatively, any of a variety of dry or wet lubricants and cleaners may be used depending on the conveyor system, environment, and the desired performance.

The dosing systems 14 and 15 and the control system 17 provide the treatment components to the dispensing system 16 in the appropriate or predetermined quantities, flow rates, and intervals. The dosing and control systems 14, 15, 17 include a supply of or source for the components (source 22 for the lubricant 18 and source 24 for the cleaner 20), a pump system, and a controller 28. The pump system move the components from the sources 22, 24 to the dispensing system 16. According to an exemplary amendment, the pump system comprise a first pump 30 for pumping the lubricant 18 from its supply 22 and a second pump (shown as a dilution and pump unit 32, which may include a dilutor for diluting a cleaner concentrate into a solution) for pumping the cleaner 20 from its source 24.

The control system 17 includes a controller 28 (e.g., control unit, device, system, etc.) controls the operation of the pump and dilution and pump systems 32 and 30. The controller 28 is in communication (wired as shown, or wireless) with valves 34 to control the flow of the conveyor treatment components. For example, the controller 28 opens and closes the valves 34 to start and stop the flow of the components. The controller may comprise a central processing unit (CPU), microprocessor, processor, programmable controller, microcontroller, or application-specific integrated circuit (ASIC) or other digital and/or analog circuitry configured to perform various input/output, control, analysis, and other functions described herein. In an exemplary embodiment, the controller includes a memory (e.g., non-volatile memory) configurable with software to perform the functions disclosed herein. According to an exemplary embodiment, the controller is a PLC (Programmable Logic Control) programmed to carry out predetermined dispensing sequences and the valve is a solenoid valve but the valve can also be a pneumatic valve. According to a particular exemplary embodiment, the control system is a Standard Control Panel S7-200 control system commercially available from Loehrke, and the solenoid valve is a Loehrke 1029427 valve. The controller may be any of a variety of commercially available PLC controllers, including PLCs commercially available from Siemens or Allen Bradley/Rockwell Automation.

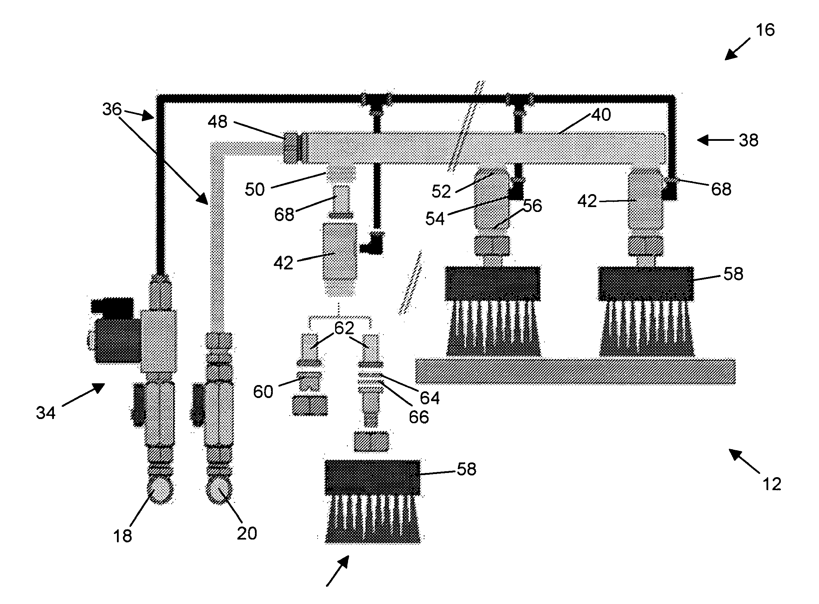

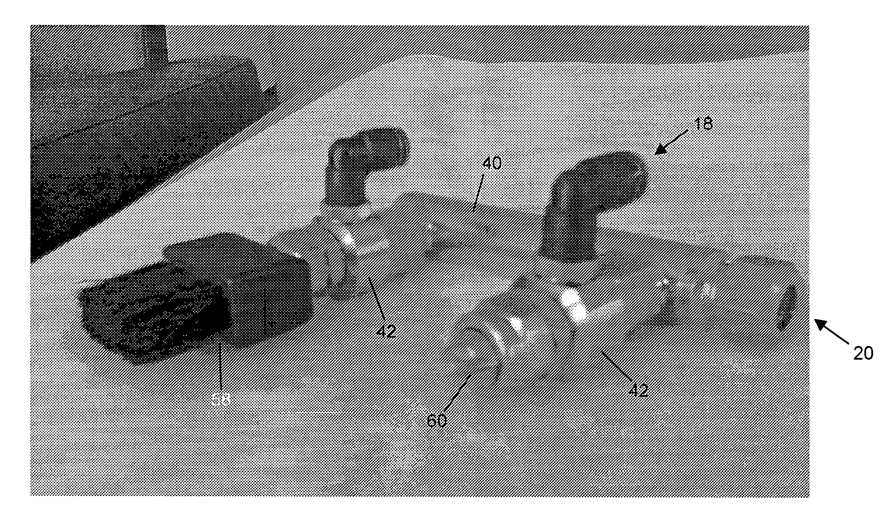

As shown in FIGS. 1 and 2, the dispensing system 16 applies the lubricant and cleaner components to the conveyor and may be located at one or more areas of a single conveyor system or to separate conveyor systems. Referring to FIGS. 1 and 3, the dispensing system 16 includes conduit systems 36 in communication with component supplies and one or more distribution heads 38. The number and position of the distribution heads will typically depend on the type of conveyor, the type of items being conveyed, and the desired treatment performance.

Conduit system 36 couples the various devices of the system 10 to allow passage of the components. Conduit system 36 includes tubing, piping, conduit, passages, plumbing, fittings, connectors, and the like. According to an exemplary embodiment, conduit may be stainless steel, plastic, or other materials that can be formed into passages.

Each distribution head 38 includes a manifold 40, one or more couplings 42, and one or more applicators 44.

The manifold 40 includes an inlet 48 coupled to the conduit system 36 in communication with one of the conveyor treatment components (lubricant 18 or cleaner 20), and an outlet 50 for each of the coupling/dispenser combinations.

The coupling 42 (e.g., adapter, connector, fitting, etc.) includes a first inlet 54 to receive the lubricant 18 from the pump 30, a second inlet 52 to receive the cleaner 20 from the pump 32, and an outlet 56. The coupling 42 acts as a "passive" device to receive either the lubricant or the cleaner and pass the component being pumped to the applicator 44. According to an alternative embodiment, the coupling 42 may act as an "active" device (e.g., a valve) to regulate the component being passed to the applicator 44.

The applicator 44 (e.g., dispenser, etc.) is coupled to the outlet of the coupling 42 and is configured to apply either the lubricant 18 or the cleaner 20 to the conveyor. The applicator 44 may comprise a brush 58, and/or a nozzle 60, and/or an orifice plates (e.g., instead of the nozzle) or combinations thereof. The orifice plates are intended to limit flow to the brush 58. The type of applicator will depend on the environment, purpose, and desired performance. The distribution head 38 in FIG. 3 is shown in an exploded view and demonstrating both nozzle 60 and brush 58 options.

By providing both components to the distribution heads 38, the system 10 has precise control of which component is being dispensed to the conveyor without having to purge the conduit between component applications and with a minimized loss of each of the 2 components when passing or switching to the other.

The distribution head 38 may also include one or more filters 62, an orifice plate 64, one or more gaskets 66 (e.g., o-ring, seal ring, etc.), one or more check valves 68 (non-return or one-way valve) and one or more fastening elements (e.g., nut, clamps, etc.). The filters 62 may have or not have a built-in non-return valve. In the figures, a filter with built-in non return valve is shown, but the kind of non return valve as well as its position may vary according to the installation specific needs. The check valves 68 may be located between the coupling 42 and the manifold 40 or conduit or in any another suitable position (even in multiple positions) and are configured to inhibit or prevent back flow of the component not being pumped. One or more valves 34 may also be located upstream of each distribution head 38 or upstream of a group of distribution heads 38. Valves 34 are configured to provide additional or alternative control of the flow of components through the system 10.

During operation, the treatment components are applied to the conveyor system 12 at predetermined intervals for predetermined periods of time. For example, at a predetermined time, the controller 28 activates the first pump 30 to move or pump lubricant 18 from its source 22 to the applicator 44. The lubricant 18 flows from the source 22, through various conduits and fittings to the first inlet 54 of the coupling 42. The lubricant 18 is prevented from traveling into the manifold 40 through the second inlet 52 by the check valve 68. The lubricant 18 flows through the coupling 42 to the outlet 56 and into the applicator 44 (brush or nozzle or orifice plate) and onto the conveyor. The controller 28 deactivates the pump 30 after a predetermined amount of time or other sensed or measured property or input.

At a predetermined time, the controller 28 activates the second pump 32 and diluter to move or pump the cleaner 20 from its source to the applicator 44. The cleaner 20 flows from the source 24, through various conduits and fittings to the second inlet 52 of the coupling 42. The cleaner 20 is prevented from traveling into the first inlet 54 and into the conduit for the lubricant by a check valve positioned close to the inlet 54 or in another suitable position or by another properly engineered device/system built/installed with the same purpose. The cleaner 20 flows through the coupling 42 to the outlet 56 and into the applicator 44 (brush or nozzle or orifice plate) and onto the conveyor. The controller 28 deactivates the pump/dilutor 32 after a predetermined amount of time or other sensed or measured property or input. Application of the lubricant 18 and cleaner 20 may be simultaneously (e.g., mixing in the coupling prior to dispensing) or sequential. The applications may occur immediately after the each other or following a predetermined amount of time, or an amount of time calculated to be based on various inputs (e.g., sensed or measured properties such as turbidity, optical scanning, etc.).

It is also important to note that the construction and arrangement of the elements of the conveyor treatment system as shown in the preferred and other exemplary embodiments are illustrative only. Although only a few embodiments of the present invention have been described in detail in this disclosure, those skilled in the art who review this disclosure will readily appreciate that many modifications are possible (e.g., variations in sizes, dimensions, structures, shapes and proportions of the various elements, values of parameters, mounting arrangements, materials, colors, orientations, etc.) without materially departing from the novel teachings and advantages of the subject matter recited in the claims. For example, the term "coupled" shall mean, for purposes of this disclosure, the joining of two members directly or indirectly to one another. Such joining may be stationary in nature or movable in nature. Such joining may be achieved with the two members or the two members and any additional intermediate members being integrally formed as a single unitary body with one another or with the two members or the two members and any additional intermediate member being attached to one another. Such joining may be permanent in nature or alternatively may be removable or releasable in nature. Such joining may also relate to mechanical, fluid, or electrical relationship between the two components. Accordingly, all such modifications are intended to be included within the scope of the present invention as defined in the appended claims. The order or sequence of any process or method steps may be varied or re-sequenced according to alternative embodiments. Other substitutions, modifications, changes and/or omissions may be made in the design, operating conditions and arrangement of the preferred and other exemplary embodiments without departing from the scope of the present invention as expressed in the appended claims.

## Claims

1. A system for delivering a first conveyor treatment component (18) and a second conveyor treatment component (20) to a conveyor, the system comprising:
a pump system (30, 32);
at least one distribution head (38) in communication with the pump system (30, 32) and comprising:
a coupling (42) having a first inlet (54) to receive the first conveyor treatment component (18) from the pump system, a second inlet (52) to receive the second conveyor treatment component (20) from the pump system, and an outlet (56);
an applicator (44) coupled to the outlet (56) of the coupling and configured to apply either the first conveyor treatment component (18) or the second conveyor treatment component (20) to the conveyor,
**characterized in that** the applicator (44) is directly coupled to the coupling (42).

2. The system of Claim 1 wherein the first conveyor treatment component (18) comprises a lubricant and the second conveyor treatment component (20) comprises a cleaning agent.

3. The system of Claim 2 wherein the lubricant is a dry lubricant.

4. The system of Claim 3 wherein the cleaning agent has, or has in addition to its cleaning capabilities, the capability to control the growth of microbiological contaminants.

5. The system of Claim 1 wherein the applicator comprises a brush (58), a nozzle (60), an orifice plate (64) or combinations thereof.

6. The system of Claim 1 wherein the pump system comprises a first pump (30) for pumping the first conveyor treatment component (18) (or a dilution of it) from a conveyor treatment component source (22) to the coupling (42) and a second pump (32) for pumping the second conveyor treatment component (20) (or a dilution of it) from a conveyor treatment component source (24) to the coupling (42).

7. The system of Claim 1 wherein the system further comprises:
a controller (28) for controlling operation of the pump system (30, 32);
a first conduit in communication with a source (22) of the first conveyor treatment component (18) and coupled to the coupling (42);
a second conduit in communication with a source (24) of the second conveyor treatment component (20);
a manifold (40) having an inlet (48) coupled to the second conduit, and a plurality of outlets (50) in communication with the plurality of distribution heads (38);
a first check valve (68) and a first filter disposed between the first inlet (52) and the source (22) of the first conveyor treatment component (20);
a second check valve (68) and a second filter located between the manifold (40) and the coupling (42).

8. A method of treating a conveyor, the method comprising:
providing a first conveyor treatment component (18), a second conveyor treatment component (20), and one or more distribution heads (38), each distribution head comprising a coupling (42) and an applicator (44), the coupling (42) having a first inlet (54) to receive the first conveyor treatment component (18) and a second inlet (52) to receive the second conveyor treatment component (20), and an outlet (56) in communication with the applicator (44);
applying the first conveyor treatment component (18) to the conveyor by pumping the first conveyor treatment component (18) to the first inlet (54) of the coupling
applying the second conveyor treatment component (20) to the conveyor by pumping the second conveyor treatment component (20) to the second inlet (52) of the coupling,
**characterized in that** the applicator (44) is directly coupled to the coupling (42).

9. The method of Claim 8 wherein the step of applying the second conveyor treatment component (20) occurs after the step of applying the first conveyor treatment component (18)

## Patentansprüche

1. System zur Ausgabe einer ersten Förderer-Behandlungskomponente (18) und einer zweiten Förderer-Behandlungskomponente (20) an einen Förderer mit:
einem Pumpensystem (30, 32); und
mindestens einem Verteilerkopf (38) in Strömungsverbindung mit dem Pumpensystem (30, 32), der/das aufweist:
eine Kupplung (42) mit einem ersten Einlass (54) zur Aufnahme der ersten Förderer-Behandlungskomponente (18) aus dem Pumpensystem, einem zweiten Einlass (52) zur Aufnahme der zweiten Förderer-Behandlungskomponente (20) aus dem Pumpensystem und einem Auslass (56); und
eine Auftrageinrichtung (44), die an den Auslass (56) der Kupplung angeschlossen und ausgeführt ist, die erste oder die zweite Förderer-Behandlungskomponente (18 bzw. 20) auf den Förderer aufzubringen;
**dadurch gekennzeichnet, dass**
die Auftrageinrichtung (44) an die Kupplung (42) direkt angeschlossen ist.

2. System nach Anspruch 1, bei dem die erste Förderer-Behandlungskomponente (18) ein Schmiermittel und die zweite Förderer-Behandlungskomponente (20) ein Reinigungsmittel aufweisen.

3. System nach Anspruch 2, bei dem das Schmiermittel ein Trocken-Schmiermittel ist.

4. System nach Anspruch 3, bei dem das Reinigungsmittel zusätzlich zu seinen Reinigungsfähigkeiten mikrobielle Verunreinigungen bekämpfen kann.

5. System nach Anspruch 1, bei dem die Auftrageinrichtung eine Bürste (58), eine Düse (60), eine Lochplatte (64) oder Kombinationen derselben aufweist.

6. System nach Anspruch 1, bei dem das Pumpensystem eine erste Pumpe (30) zum Zupumpen der ersten Förderer-Behandlungskomponente (18) (oder ihrer Verdünnung) aus einer Quelle (22) derselben an die Kupplung (42) und eine zweite Pumpe (32) zum Zupumpen der zweiten Förderer-Behandlungskomponente (20) (oder ihrer Verdünnung) aus einer Quelle (24) derselben an die Kupplung (42) aufweist.

7. System nach Anspruch 1 weiterhin mit:
eine Steuereinheit (28) zum Steuern des Pumpensystems (30, 32);
einer ersten Leitung, die in Strömungsverbindung mit einer Quelle (22) der ersten Förderer-Behandlungskomponente (18) steht und an die Kupplung (42) angeschlossen ist;
einer zweiten Leitung in Strömungsverbindung mit einer Quelle (24) der zweiten Förderer-Behandlungskomponente (20);
einer Sammelkammer (40) mit einem an die zweite Leitung angeschlossenen Einlass (48) und einer Vielzahl von Auslässen (50) in Strömungsverbindung mit den Verteilerköpfen (38);
einem ersten Rückschlagventil (68) und einem ersten Filter zwischen dem ersten Einlass (52) und der Quelle (22) der ersten Förderer-Behandlungskomponente (20); und
einem zweiten Rückschlagventil (68) und einem zweiten Filter zwischen der Sammelkammer (40) und der Kupplung (42).

8. Verfahren zum Behandeln eines Förderers, bei dem:
eine erste Förderer-Behandlungskomponente (18), eine zweite Förderer-Behandlungskomponente (20) sowie ein oder mehr Verteilerköpfe (38) bereitgestellt werden, wobei die Verteilerköpfe jeweils eine Auftrageinrichtung (44) sowie eine Kupplung (42) mit einem ersten Einlass (54) zur Aufnahme der ersten Förderer-Behandlungskomponente (18), einem zweiten Einlass (52) zur Aufnahme der zweiten Förderer-Behandlungskomponente (18) und einem Auslass (56) in Strömungsverbindung mit der Auftrageinrichtung (44) aufweisen;
die erste Förderer-Behandlungskomponente (18) auf den Förderer aufgetragen wird, indem sie dem ersten Einlass (54) der Kupplung zugepumpt wird; und
die zweite Förderer-Behandlungskomponente (20) auf den Förderer aufgetragen wird, indem sie dem zweiten Einlass (52) der Kupplung zugepumpt wird;
**dadurch gekennzeichnet, dass**
die Auftrageinrichtung (44) an die Kupplung (42) direkt angeschlossen ist.

9. Verfahren nach Anspruch 8, bei dem das Auftragen der zweiten Förderer-Behandlungskomponente (20) nach dem Auftragen der ersten Förderer-Behandlungskomponente (18) erfolgt.

## Revendications

1. Système pour distribuer un premier composant de traitement de transporteur (18) et un deuxième composant de traitement de transporteur (20) à un transporteur, le système comprenant :
un système de pompe (30, 32) ;
au moins une tête de distribution (38) en communication avec le système de pompe (30, 32) et comprenant :
un couplage (42) ayant une première entrée (54) pour recevoir le premier composant de traitement de transporteur (18) du système de pompe, et une deuxième entrée (52) pour recevoir le deuxième composant de traitement de transporteur (20) du système de pompe, et une sortie (56) ;
un applicateur (44) couplé à la sortie (56) du couplage et configuré pour appliquer le premier composant de traitement de transporteur (18) ou le deuxième composant de traitement de transporteur (20) au transporteur,
**caractérisé en ce que** l'applicateur (44) est directement couplé au couplage (42).

2. Système selon la revendication 1, dans lequel le premier composant de traitement de transporteur (18) comprend un lubrifiant et le deuxième composant de traitement de transporteur (20) comprend un agent de nettoyage.

3. Système selon la revendication 2, dans lequel le lubrifiant est un lubrifiant sec.

4. Système selon la revendication 3, dans lequel l'agent de nettoyage a ou a en plus de ses capacités de nettoyage, la capacité de contrôler la croissance des contaminants microbiologiques.

5. Système selon la revendication 1, dans lequel l'applicateur comprend une brosse (58), une buse (60), une plaque d'orifice (64) ou leurs combinaisons.

6. Système selon la revendication 1, dans lequel le système de pompe comprend une première pompe (30) pour pomper le premier composant de traitement de transporteur (18) (ou une dilution de ce dernier), d'une source de composant de traitement de transporteur (22) au couplage (42) et une deuxième pompe (32) pour pomper le deuxième composant de traitement de transporteur (20) (ou une dilution de ce dernier), d'une source de composant de traitement de transporteur (24) au couplage (42).

7. Système selon la revendication 1, dans lequel le système comprend en outre :
un contrôleur (28) pour contrôler le fonctionnement du système de pompe (30, 32) ;
un premier conduit en communication avec une source (22) du premier composant de traitement de transporteur (18) et couplé au couplage (42) ;
un deuxième conduit en communication avec une source (24) du deuxième composant de traitement de transporteur (20) ;
un collecteur (40) ayant une entrée (48) couplée au deuxième conduit, et une pluralité de sorties (50) en communication avec la pluralité de têtes de distribution (38) ;
une première soupape de non-retour (68) et un premier filtre disposé entre la première entrée (52) et la source (22) du premier composant de traitement de transporteur (20) ;
une deuxième soupape de non-retour (68) et un deuxième filtre positionné entre le collecteur (40) et le couplage (42).

8. Procédé pour traiter un transporteur, le procédé comprenant les étapes consistant à :
prévoir un premier composant de traitement de transporteur (18), un deuxième composant de traitement de transporteur (20) et une ou plusieurs têtes de distribution (38), chaque tête de distribution comprenant un couplage (42) et un applicateur (44), le couplage (42) ayant une première entrée (54) pour recevoir le premier composant de traitement de transporteur (18) et une deuxième entrée (52) pour recevoir le deuxième composant de traitement de transporteur (20), et une sortie (56) en communication avec l'applicateur (44) ;
appliquer le premier composant de traitement de transporteur (18) au transporteur en pompant le premier composant de traitement de transporteur (18) vers la première entrée (54) du couplage ;
appliquer le deuxième composant de traitement de transporteur (20) au transporteur en pompant le deuxième composant de traitement de transporteur (20) vers la deuxième entrée (52) du couplage ;
**caractérisé en ce que** l'applicateur (44) est directement couplé au couplage (42).

9. Procédé selon la revendication 8, dans lequel l'étape consistant à appliquer le deuxième composant de traitement de transporteur (20) a lieu après l'étape consistant à appliquer le premier composant de traitement de transporteur (18).
